# FASCICULE DE BREVET EUROPEEN

(11) **EP 4 034 776 B1**
(45) Date de publication et mention de la délivrance du brevet: **02.08.2023**
(21) Numéro de dépôt: 20786019.8
(22) Date de dépôt: 07.09.2020
(51) Int. Cl.: F16C 19/18, F16C 19/50, F16C 19/54, F01D 25/16, F02C 7/06, F02C 7/36

(54) **ENSEMBLE DE SOUFFLANTE DE TURBOMACHINE COMPRENANT UN ROULEMENT À ROULEAUX ET UN ROULEMENT À DOUBLE RANGÉE DE BILLES À CONTACT OBLIQUE**
TURBOMASCHINENGEBLÄSEANORDNUNG MIT EINEM ROLLENLAGER UND EINEM ZWEIREIHIGEN KUGELLAGER MIT SCHRÄGKONTAKT
TURBOMACHINE FAN ASSEMBLY COMPRISING A ROLLER BEARING AND A DOUBLE-ROW BALL BEARING WITH OBLIQUE CONTACT

(30) Priorité: 27.09.2019 FR 1910715
(43) Date de publication de la demande: 03.08.2022
(73) Titulaire: SAFRAN AIRCRAFT ENGINES, 75015 Paris (FR)
(72) Inventeur: MARLIN, François, Marie, Paul, 77550 MOISSY-CRAMAYEL (FR); DESOMBRE, Didier, Gabriel, Bertrand, 77550 MOISSY-CRAMAYEL (FR); JACQUEMARD, Christophe, Paul, 77550 MOISSY-CRAMAYEL (FR); PERROT, Laurent, Paul, François, 77550 MOISSY-CRAMAYEL (FR)
(74) Mandataire: Brevalex
(86) Numéro de dépôt international: PCT/FR2020/051540
(87) Numéro de publication internationale: WO 2021/058888

(56) Documents cités:
- FR-A1- 3 046 407
- US-A1- 2013 323 047
- US-A1- 2014 230 403

## Description

### Domaine technique

L'invention se rapporte au domaine du guidage et de la rétention axiale d'un arbre de soufflante de turbomachine d'aéronef.

De manière non limitative, l'invention se rapporte plus spécifiquement au domaine des turboréacteurs comprenant un réducteur entre l'arbre de soufflante et un arbre de turbine.

### État de la technique antérieure

Certains turboréacteurs à double corps comprennent un réducteur entre l'arbre de soufflante et l'arbre de turbine basse pression. Un tel réducteur entraîne un découplage axial de ces arbres, au sens où un effort axial appliqué à l'un de ces arbres n'induit pas en tant que tel une contrainte axiale sur l'autre arbre.

En fonction des différentes phases de vol de l'aéronef, l'effort axial appliqué sur l'arbre de soufflante peut s'inverser. En phase de croisière, l'arbre de soufflante est soumis à un effort axial tendant à entraîner celui-ci vers l'amont du turboréacteur tandis qu'en phase de ralentissement, ou en régime d'autorotation, cet arbre est soumis à un effort axial tendant à l'entraîner vers l'aval du turboréacteur.

Dans une architecture à réducteur, la rétention axiale de la soufflante est typiquement assurée par un ou plusieurs paliers de guidage de l'arbre de soufflante.

Il existe en particulier des turboréacteurs dans lesquels l'arbre de soufflante est guidé en rotation par un roulement comportant deux rangées de rouleaux coniques. Un tel roulement permet de maintenir axialement la soufflante, chaque rangée de rouleaux formant avec des bagues internes et externes correspondantes une butée axiale dans un sens respectif.

La précharge d'un tel roulement a une incidence directe sur l'amplitude des déplacements axiaux et radiaux des aubes de la soufflante, et par suite sur le jeu radial qui doit être prévu entre ces aubes et les carters de soufflante. Réciproquement, ce jeu radial doit aussi autoriser la dilatation des carters de soufflante lors de leur réchauffement. Par conséquent, la dilatation thermique des carters de soufflante nécessite de réduire la précharge du roulement pour réaliser une précharge relativement souple. Il en résulte une réduction des performances aérodynamiques. Il en résulte aussi une réduction de la durée de vie du réducteur.

De plus, l'architecture précitée est de mise en oeuvre complexe, en particulier en termes de réglage du roulement à double rangée de rouleaux coniques.

Des modes de réalisation alternatifs sont connus des documents US 2013/323047 A1 et US2014/330403 A1. US 2013/323047 A1 montre un arbre de soufflante supporté par deux roulements à une rangée de rouleaux coniques montés en O. US2014/330403 A1 montre un guidage en rotation selon le préambule de la revendication 1, assuré par un roulement à une rangée de rouleaux cylindriques et un roulement à une rangée de billes.

### Exposé de l'invention

L'invention vise à procurer un ensemble de soufflante capable de surmonter de tels inconvénients de manière à améliorer les performances aérodynamiques de la turbomachine et, le cas échéant, augmenter la durée de vie du réducteur.

Un autre but de l'invention est de procurer un ensemble de soufflante plus simple à mettre en oeuvre qu'une architecture comprenant un roulement à double rangée de rouleaux coniques.

A cet effet, l'invention a pour objet un ensemble de soufflante pour turbomachine d'aéronef, cet ensemble comprenant un arbre de soufflante et un premier et un deuxième roulement configurés pour guider l'arbre de soufflante en rotation autour d'un axe central, cet ensemble étant caractérisé en ce que le premier roulement est à rouleaux cylindriques et le deuxième roulement est à double rangée de billes à contact oblique.

Le premier roulement, à rouleaux cylindriques, permet de reprendre les efforts radiaux de la soufflante ainsi que les contraintes radiales résultant de la dilatation thermique des supports paliers et des carters de la soufflante. Entre autres avantages, l'encombrement radial d'un tel roulement est relativement limité.

Le deuxième roulement, à double rangée de billes à contact oblique, permet de reprendre les efforts axiaux de l'arbre de soufflante, dans les deux sens, ainsi que les efforts radiaux.

Un tel ensemble de soufflante permet de réaliser une précharge relativement importante du deuxième roulement, et donc d'augmenter la rigidité du deuxième roulement de manière à réduire l'amplitude des déplacements axiaux et radiaux de l'arbre de soufflante.

L'invention permet ainsi de réduire le jeu radial entre les aubes et les carters de la soufflante de manière à améliorer les performances aérodynamiques de la turbomachine.

Lorsqu'un tel ensemble de soufflante est monté dans une turbomachine comprenant un réducteur entre l'arbre de soufflante et un arbre de turbine, la précharge rigide du deuxième roulement permet aussi de réduire le jeu radial et axial dans l'engrenage du réducteur, ce qui permet de préserver la denture de cet engrenage et d'augmenter la durée de vie du réducteur.

Compte tenu de la réduction des déplacements axiaux et radiaux de l'arbre de soufflante, il est en outre possible d'utiliser un engrenage de réducteur présentant une denture en chevrons et de réduire ainsi les vibrations correspondantes.

Concernant plus spécifiquement la structure du deuxième roulement, il est préféré que celui-ci comprenne une première et une deuxième rangée de billes, ainsi qu'une bague interne et une bague externe comprenant chacune une première et une deuxième piste, la première piste des bagues interne et externe recevant la première rangée de billes, la deuxième piste des bagues interne et externe recevant la deuxième rangée de billes.

Dans un mode de réalisation, l'une parmi les bagues interne et externe du deuxième roulement peut comprendre une première demi-bague formant la première piste de cette bague et une deuxième demi-bague formant la deuxième piste de cette bague.

De préférence, la première et la deuxième demi-bague peuvent former ensemble la bague interne du deuxième roulement.

La réalisation de l'une des bagues du deuxième roulement sous la forme de deux demi-bagues facilite le montage et le démontage de ce roulement.

De préférence, l'autre parmi les bagues interne et externe du deuxième roulement peut comprendre une unique pièce formant la première et la deuxième piste de cette bague. Par exemple, la bague interne du deuxième roulement peut comprendre lesdites première et deuxième demi-bagues, et la bague externe de ce roulement peut être réalisée d'une seule pièce.

Dans un mode de réalisation, les billes de la première rangée peuvent avoir un diamètre différent des billes de la deuxième rangée.

La différence de diamètre entre les billes de la première et de la deuxième rangée permet de dimensionner celles-ci en fonction des efforts respectifs auxquels elles sont effectivement soumises lors de la mise en oeuvre de la turbomachine.

En particulier, l'effort axial sur l'arbre de soufflante en phase de croisière, s'exerçant de l'aval vers l'amont le long dudit axe central, est plus important que celui en phase de ralenti ou d'autorotation, lequel s'exerce le long dudit axe central de l'amont vers l'aval.

En cas de montage du deuxième roulement en X, les billes de la rangée amont peuvent par conséquent présenter un diamètre supérieur au diamètre des billes de la rangée aval puisque ce sont les billes de la rangée amont qui sont dans ce cas sollicitées en phase de croisière, et réciproquement en cas de montage en O (voir ci-après pour les montages en X ou en O).

De préférence, la différence de diamètre entre les billes de la première et de la deuxième rangée peut être telle que le rapport du diamètre des billes de l'une de ces rangées et le diamètre des billes de l'autre rangée soit supérieur à 1,5.

Selon une première variante, le montage du deuxième roulement peut être en X, c'est-à-dire que la première et la deuxième piste de la bague externe du deuxième roulement peuvent être axialement situées entre la première et la deuxième piste de la bague interne du deuxième roulement.

Autrement dit, dans le cas d'un montage en X, les deux rangées de billes établissent un contact axialement vers l'extérieur avec les pistes correspondantes de la bague externe et un contact axialement vers l'intérieur avec les pistes correspondantes de la bague interne.

Selon une deuxième variante, le montage du deuxième roulement peut être en O, c'est-à-dire que la première et la deuxième piste de la bague externe du deuxième roulement peuvent être axialement situées entre la première et la deuxième piste de la bague interne du deuxième roulement.

Autrement dit, dans le cas d'un montage en O, les deux rangées de billes établissent un contact axialement vers l'extérieur avec les pistes correspondantes de la bague interne et un contact axialement vers l'intérieur avec les pistes correspondantes de la bague externe.

Un tel montage en O permet d'augmenter la stabilité du palier et en particulier la raideur angulaire d'un support fixe supportant la bague externe, par comparaison avec un montage en X. Lorsqu'un tel support fixe supporte également la bague externe du premier roulement à rouleaux, la raideur conférée par un tel montage en O permet le cas échéant de réduire la sollicitation de la cage souple du premier roulement, voire de supprimer cette cage souple.

L'ensemble de soufflante selon l'invention peut comprendre un support fixe configuré pour supporter une bague externe du deuxième roulement, le support et la bague externe du deuxième roulement comprenant chacun un élément de liaison formant une surface d'appui respective, lesdits éléments de liaison étant configurés de sorte que :
- un effort appliqué sur l'arbre de soufflante selon un premier sens le long dudit axe central tende à plaquer l'une contre l'autre les surfaces d'appui desdits éléments de liaison,
- un effort appliqué sur l'arbre de soufflante selon un deuxième sens le long dudit axe central tende à éloigner l'une de l'autre les surfaces d'appui desdits éléments de liaison.

Les surfaces d'appui peuvent de préférence être perpendiculaires audit axe central, de sorte que la surface d'appui formée par l'élément de liaison du support fixe soit axialement en regard de la surface d'appui formée par la bague externe du deuxième roulement.

Pour maintenir les surfaces d'appui l'une contre l'autre, en particulier lorsque l'effort sur l'arbre de soufflante est appliqué selon ledit deuxième sens, l'ensemble de soufflante peut comprendre des moyens de fixation tels que des boulons configurés pour fixer ensemble le support et la bague externe du deuxième roulement par leur élément de liaison.

La configuration décrite ci-dessus permet notamment de ne pas solliciter les moyens de fixation en régime de croisière.

Dans un mode de réalisation, l'arbre de soufflante peut comprendre une première partie de support portant une bague interne du premier roulement, une deuxième partie de support portant une bague interne du deuxième roulement, une première partie de jonction tronconique reliant entre elles la première et la deuxième partie de support, et une deuxième partie de jonction tronconique destinée à relier entre eux la deuxième partie de support et un réducteur de la turbomachine, ladite deuxième partie de support ayant une épaisseur radiale supérieure à une épaisseur radiale de la première et de la deuxième partie de jonction tronconique.

Autrement dit, il peut être prévu une surépaisseur de l'arbre de soufflante au niveau du deuxième roulement, ce qui permet de limiter le phénomène de fluage de cet arbre en cas de surchauffe et d'éviter une fragilisation des autres parties de cet arbre et de l'ensemble de soufflante.

L'invention a aussi pour objet une turbomachine d'aéronef, cette turbomachine comprenant un ensemble de soufflante tel que défini ci-dessus.

Dans un mode de réalisation, cette turbomachine peut comprendre un arbre de turbine et un réducteur configuré pour réduire la vitesse de rotation entre l'arbre de turbine et l'arbre de soufflante.

De préférence, le premier roulement, à rouleaux cylindriques, peut être axialement aligné avec des aubes de l'ensemble de soufflante de la turbomachine.

Le deuxième roulement, à double rangée de billes à contact oblique, peut être positionné axialement entre le premier roulement à rouleaux cylindriques et le réducteur.

L'invention a aussi pour objet un ensemble propulsif comprenant une telle turbomachine, ou comprenant plus généralement un ensemble de soufflante tel que défini ci-dessus, ainsi qu'un aéronef comprenant un tel ensemble propulsif.

Enfin, l'invention a aussi pour objet des procédés de montage et de démontage d'un ensemble de soufflante tel que défini ci-dessus.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un ensemble propulsif d'aéronef comprenant un turboréacteur à double corps et double flux conforme à l'invention ;
[Fig. 2] est une vue schématique d'une architecture d'ensemble propulsif d'aéronef conforme à l'invention ;
[Fig. 3] est une vue schématique partielle en coupe axiale d'un ensemble de soufflante conforme à l'invention, cet ensemble de soufflante comprenant un roulement à double rangée de billes à contact oblique selon un premier mode de réalisation ;
[Fig. 4] est une vue schématique partielle en coupe axiale du roulement à double rangée de billes à contact oblique de la figure 3 ;
[Fig. 5] est une vue schématique partielle en coupe axiale d'un roulement à double rangée de billes à contact oblique selon un deuxième mode de réalisation, pour ensemble de soufflante selon l'invention.

### Description détaillée de modes de réalisation

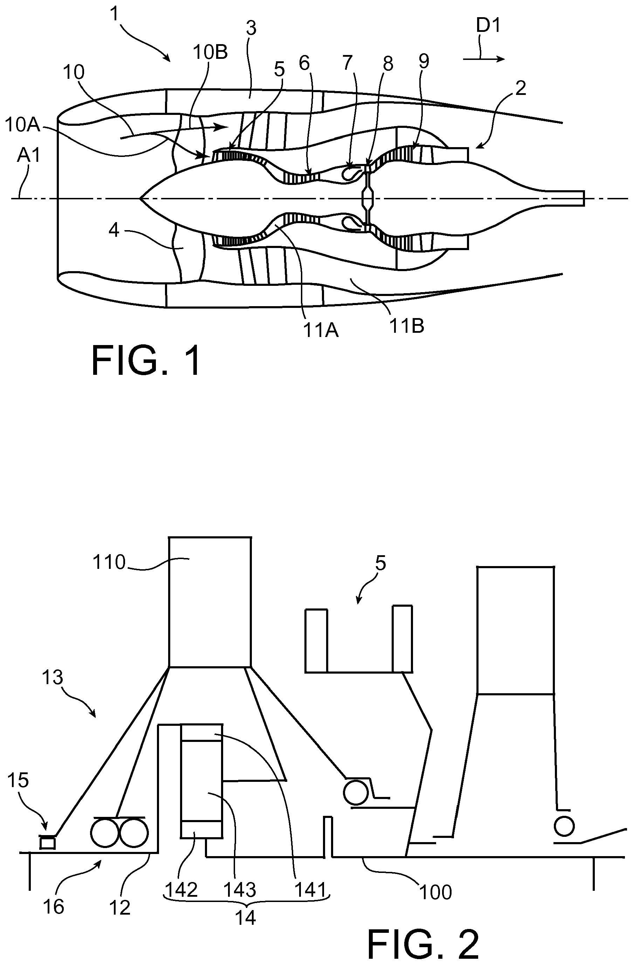

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux bien connu dans le domaine aéronautique.

Par la suite, les termes « amont » et « aval » sont définis par rapport à une direction principale D1 d'écoulement des gaz à travers l'ensemble propulsif 1 lorsque celui-ci est propulsé.

Le turboréacteur 2 présente un axe central longitudinal A1 autour duquel s'étendent ses différents composants, en l'occurrence, de l'amont vers l'aval du turboréacteur 2, une soufflante dont apparaissent des aubes 4 sur la figure 1, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

Le turboréacteur 2 est à double corps au sens où le compresseur basse pression 5 et la turbine basse pression 9 comprennent un rotor porté par un arbre de corps basse pression, tandis que le compresseur haute pression 6 et la turbine haute pression 8 comprennent un rotor porté par un arbre de corps basse pression. Ces arbres de corps haute et basse pression sont prévus pour être entraînés en rotation autour de l'axe A1 à des vitesses différentes.

De manière conventionnelle, lors du fonctionnement d'un tel turboréacteur 2, un écoulement d'air 10 pénètre dans l'ensemble propulsif 1 par une entrée d'air en amont de la nacelle 3, traverse les aubes 4 de la soufflante puis se divise en un flux primaire 10A central et un flux secondaire 10B. Le flux primaire 10A s'écoule dans une veine principale 11A de circulation des gaz traversant les compresseurs 5 et 6, la chambre de combustion 7 et les turbines 8 et 9. Le flux secondaire 10B s'écoule quant à lui dans une veine secondaire 11B entourant le générateur de gaz et délimitée radialement vers l'extérieur par la nacelle 3.

La figure 2 montre schématiquement une architecture de turboréacteur 2 comprenant un ensemble de soufflante 13 conforme à l'invention, un arbre de corps basse pression 100 et un réducteur 14.

L'ensemble de soufflante 13 comprend au moins une partie de la soufflante incluant un arbre de soufflante 12 et des moyens de guidage 16 de cet arbre 12.

De manière connue en soi, le réducteur 14 est un réducteur épicycloïdal comprenant une couronne 141, un pignon planétaire intérieur 142 et des pignons satellites 143.

Dans cet exemple, la couronne 141 est solidaire de l'arbre de soufflante 12 et le pignon planétaire intérieur 142 est solidaire de l'arbre de corps basse pression 100. Les pignons satellites 143 sont guidés en rotation par un porte-satellites (non représenté) solidaire d'un carter d'entrée 110 du turboréacteur 2.

Le réducteur 14 relie ainsi l'arbre de soufflante 12 à l'arbre de corps basse pression 100 de manière à réduire la vitesse de rotation de l'arbre de soufflante 12 relativement à la vitesse de rotation de l'arbre de corps basse pression 100, ce qui permet une amélioration du rendement propulsif du turboréacteur 2.

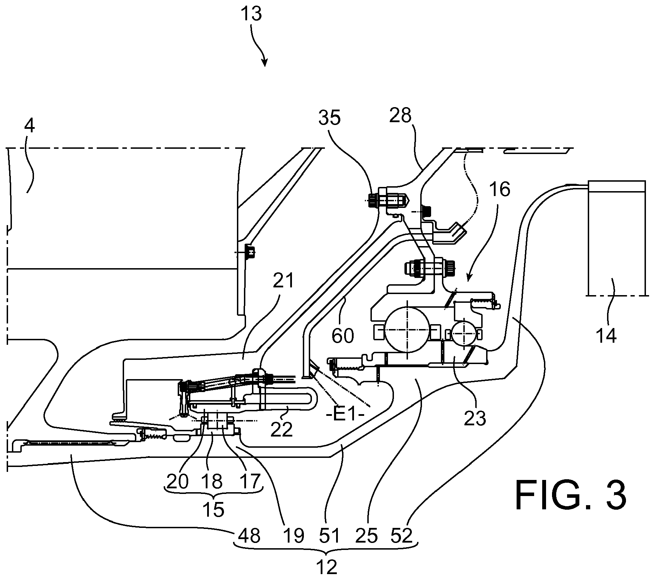

Un ensemble de soufflante 13 conforme à l'invention est représenté de manière plus détaillée à la figure 3.

En référence à la figure 3, le guidage de l'arbre de soufflante 12, en rotation autour de l'axe central longitudinal A1 du turboréacteur 2, est assuré par deux roulements 15 et 16.

Le premier roulement 15, ou roulement amont, est un roulement à rouleaux 17.

Dans cet exemple, les rouleaux 17 du roulement amont 15 sont cylindriques.

Le roulement amont 15 comprend une bague radialement interne 18 monté sur une première partie de support 19 de l'arbre de soufflante 12, par exemple par frettage, de sorte à être solidaire de cet arbre 12 en rotation autour de l'axe A1.

Le roulement amont 15 comprend une bague radialement externe 20 reliée à une branche 21 d'un carter fixe du turboréacteur 2 via une cage souple 22 ayant une fonction d'amortissement radial. Le carter fixe correspond dans cet exemple au carter d'entrée 110 de la figure 2.

La mise en oeuvre d'une telle cage souple 22 étant bien connue dans l'état de la technique antérieure, sa structure et son fonctionnement ne sont pas décrits plus avant dans la présente description.

De plus, la liaison entre la bague externe 20 du roulement amont 15 et le carter 110 peut être réalisée par tout autre moyen de liaison, par exemple par liaison directe.

Le deuxième roulement 16, ou roulement aval, est un roulement à double rangée de billes à contact oblique.

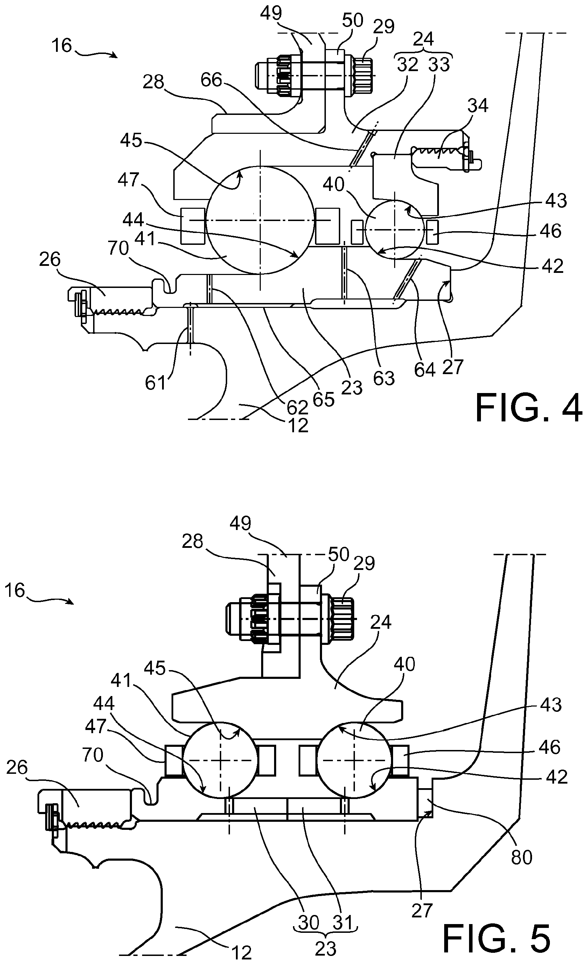

En référence à la figure 4 qui montre un agrandissement du roulement aval 16 de la figure 3, le roulement aval 16 comprend une bague radialement interne 23 et une bague radialement externe 24.

La bague interne 23 est montée sur une deuxième partie de support 25 de l'arbre de soufflante 12, par exemple par frettage, de sorte à être solidaire de cet arbre 12 en rotation autour de l'axe A1. Le maintien en position axiale de la bague interne 23 est dans cet exemple réalisé par un écrou 26 vissé sur l'arbre 12 en amont de la bague interne 23 et exerçant sur celle-ci un effort de plaquage contre un épaulement 27 de l'arbre de soufflante 12. Dans un mode de réalisation non représenté, une cale peut être placée entre la bague interne 23 et l'épaulement 27 (voir plus loin ci-dessous).

La bague externe 24 est quant à elle reliée à un support 28, par exemple par frettage, et fixée à ce support 28 par des moyens de fixation 29 de type vis-écrou, assurant un maintien à la fois axial et en rotation de la bague externe 24 par rapport au support 28.

En référence à la figure 3, le support 28 de la bague externe 24 du roulement aval 16 et ladite branche 21 de carter 110 reliée à la bague externe 20 du roulement amont 15 sont dans cet exemple reliés l'un à l'autre par des moyens de fixation 35 tels que des vis de manière à former ensemble une partie dudit carter fixe 110 du turboréacteur 2.

Dans l'exemple de la figure 4, la bague interne 23 du roulement aval 16 est réalisée d'une seule pièce et la bague externe 24 comprend deux parties 32 et 33 formant respectivement un élément de bague externe amont (ou demi-bague externe amont) et un élément de bague externe aval (ou demi-bague externe aval).

L'élément de bague externe amont 32 constitue une partie principale de la bague externe 24 notamment en ce qu'elle relie la bague externe 24 au support 28 et porte dans cet exemple l'élément de bague externe aval 33.

A cet effet, l'élément de bague externe amont 32 comprend un logement recevant l'élément de bague externe aval 33 (voir figure 4).

Le maintien en position axiale des éléments de bague externe amont 32 et aval 33 l'un par rapport à l'autre est réalisé par un élément fileté 34 vissé sur l'élément de bague externe amont 32 de manière à enserrer l'élément de bague externe aval 33 entre cet élément fileté 34 et un épaulement de l'élément de bague externe amont 32.

Le roulement aval 16 comprend une première rangée de billes 40, ou rangée de billes aval, et une deuxième rangée de billes 41, ou rangée de billes amont. Ces deux rangées de billes 40 et 41 sont engagées dans des pistes respectives des bagues 23 et 24 de manière à établir un contact oblique avec ces pistes.

Plus précisément, dans la configuration de la figure 4, la rangée de billes aval 40 est en appui contre une piste 42 formée par la bague interne 23 et contre une piste 43 formée par l'élément de bague externe aval 33. La rangée de billes amont 41 est pour sa part en appui contre une piste 44 formée par la bague interne 23 et contre une piste 45 formée par l'élément de bague externe amont 32.

Les pistes 42 et 43 sont dites « pistes aval » ou « premières pistes » car elles coopèrent avec la rangée de billes aval 40 ou première rangée de billes. De même, les pistes 44 et 45 sont dites « pistes amont » ou « deuxièmes pistes » car elles coopèrent avec la rangée de billes amont 41 ou deuxième rangée de billes.

Les pistes aval 42 et 43 et les pistes amont 44 et 45 sont configurées de sorte que, dans la configuration de la figure 4, celles-ci exercent une précontrainte axiale respectivement sur la rangée de billes aval 40 et la rangée de billes amont 41, empêchant un déplacement axial relatif des bagues interne 23 et externe 24 respectivement dans un premier et un deuxième sens.

Cette précontrainte axiale, ou précharge, est obtenue par serrage des éléments de bague externe amont 32 et aval 33 l'un contre l'autre à l'aide de l'élément fileté 34.

Bien entendu, le roulement 16 comprend des cages 46 et 47 configurées pour maintenir les billes, respectivement des rangées aval 40 et amont 41, circonférentiellement espacées les unes des autres, afin de répartir les efforts circonférentiellement et permettre le bon fonctionnement du roulement 16.

Le roulement 16 de la figure 4 correspond à un montage de ses éléments en X, la piste aval 42 et la piste amont 44 de la bague interne 23 étant axialement situées entre la piste aval 43 et la piste amont 45 de la bague externe 24.

Dans le mode de réalisation de la figure 4, les billes de la rangée amont 41 ont un diamètre supérieur, proche du double de celui des billes de la rangée aval 40.

En effet, les billes de la rangée amont 41 sont dans ce cas sollicitées en phase de croisière lors de laquelle l'arbre de soufflante 12 est entraîné de l'aval vers l'amont. Ces billes sont donc en principe davantage sollicitées que celles de la rangée aval 40.

Un tel différentiel de taille des billes présuppose toutefois un différentiel correspondant des coordonnées radiales des pistes respectives des bagues interne 23 et externe 24. Dans l'exemple de la figure 4, cette condition est satisfaite grâce à la réalisation de la bague externe 24 en deux éléments 32 et 33, l'élément de bague externe aval 33 étant configuré pour rapporter radialement vers l'intérieur la piste 43 formé par cet élément 33 par rapport à la coordonnée radiale de la piste 45 formée par l'élément de bague externe amont 32.

La figure 5 montre un autre mode de réalisation du roulement aval 16, dans lequel les billes de chaque rangée ont une dimension identique, ce qui permet notamment de simplifier ce roulement.

Le roulement 16 de la figure 5 est décrit ci-après par ses différences par rapport à celui de la figure 4.

La bague interne 23 du roulement 16 de la figure 5 comprend deux demi-bagues 30 et 31 de dimension axiale sensiblement identique l'une par rapport à l'autre, formant chacune une portion axiale annulaire de la bague interne 23 sensiblement symétrique. La demi-bague interne amont 30 et la demi-bague interne aval 31 forment respectivement la piste amont 44 et la piste aval 42 de la bague interne 23. Les demi-bagues interne amont 30 et aval 31 sont configurées axialement en vis-à-vis l'une par rapport à l'autre de sorte que le serrage de l'écrou 26 entraîne un plaquage de la demi-bague interne amont 30 contre la demi-bague interne aval 31, et un plaquage de cette dernière contre une cale 80 interposée entre la demi-bague interne aval 31 et l'épaulement 27 de l'arbre de soufflante 12 (voir plus loin ci-dessous concernant l'intérêt d'une telle cale 80).

La bague externe 24 du roulement 16 de la figure 5 est réalisée d'une seule pièce formant à la fois la piste aval 43 recevant la rangée de billes aval 40 et la piste amont 45 recevant la rangée de billes amont 41.

Le roulement 16 de la figure 5 correspond à un montage en O, la piste aval 43 et la piste amont 45 de la bague externe 24 étant axialement situées entre la piste aval 42 et la piste amont 44 de la bague interne 23.

La rigidité conférée par un montage du roulement aval 16 en O permet de soulager le roulement amont 15, permettant éventuellement de réaliser un montage de l'ensemble de soufflante 13 sans cage souple 22.

De manière non limitative, les bagues interne 23 et externe 24 du roulement aval 16 peuvent être réalisées dans un matériau métallique tel que de l'acier de type M50 pour la bague interne 23, et de type M50NIL ou 32CDV13 pour la bague structurale externe 24. Les billes des rangées amont 41 et aval 40 peuvent être réalisées dans un acier de type M50 ou en céramique.

Dans chacun des modes de réalisation des figures 4 et 5, le support 28 est configuré pour supporter la bague externe 24 du roulement 16 par des éléments de liaison respectifs de ces pièces.

Plus précisément, le support 28 comprend un élément de liaison 49 consistant en une partie du support formant une surface d'appui sensiblement perpendiculaire par rapport à l'axe A1.

La bague externe 24 comprend aussi un élément de liaison 50 formant saillie radialement vers l'extérieur par rapport aux autres parties de la bague externe 24, cet élément de liaison 50 formant une surface d'appui sensiblement perpendiculaire par rapport à l'axe A1 et axialement en vis-à-vis de la surface d'appui de l'élément de liaison 49 du support 28.

Une telle configuration des éléments de liaison 49 et 50 du support 28 et de la bague externe 24 se traduit, d'une part, par un plaquage l'une contre l'autre des surfaces d'appui de ces éléments de liaison 49 et 50 lorsqu'un effort est appliqué sur l'arbre de soufflante 12 selon un sens allant de l'aval vers l'amont le long dudit axe central A1. Elle se traduit d'autre part par un éloignement de ces surfaces d'appui, l'une par rapport à l'autre, lorsqu'un effort est appliqué sur l'arbre de soufflante 12 selon un sens inverse, allant de l'amont vers l'aval le long dudit axe central A1.

Cette configuration permet au support 28 de reprendre l'effort de poussée de l'arbre de soufflante 12, lorsque celui-ci est entraîné vers l'amont du turboréacteur 2, en particulier en phase de croisière, sans solliciter les moyens de fixation 29.

Concernant par ailleurs la géométrie de l'arbre de soufflante 12, visible sur la figure 3, celui-ci comprend notamment, de l'amont vers l'aval :
- un tronçon 48 portant un disque lequel comporte les aubes 4 de la soufflante, la liaison entre ce tronçon 48 et le disque étant de préférence cannelée,
- ladite première partie de support 19 portant la bague interne 18 du roulement amont 15, le diamètre de cette première partie de support 19 étant proche de celui du tronçon 48 et étant axialement contiguë par rapport à ce tronçon 48,
- une première partie de jonction tronconique 51 reliant entre elles la première 19 et la deuxième partie de support 25 de sorte que le diamètre de la deuxième partie de support 25 soit supérieur au diamètre de la première partie de support 19, cette première partie de jonction tronconique 51 délimitant une enceinte E1 de lubrification du roulement aval 16,
- ladite deuxième partie de support 25 portant la bague interne 23 du roulement aval 16,
- une deuxième partie de jonction tronconique 52 reliant entre eux la deuxième partie de support 25 et le réducteur 14 de sorte que le diamètre de la partie de l'arbre 12 coopérant avec le réducteur 14 soit supérieur au diamètre de la deuxième partie de support 25.

Ces différentes parties de l'arbre de soufflante 12 sont sensiblement reliées les unes aux autres par leurs extrémités axiales, à l'exception de la deuxième partie de support 25 qui est reliée à la première partie de jonction tronconique 51 par une partie formant une surépaisseur radiale au niveau d'une région axialement centrale de cette partie de support 25.

La deuxième partie de support 25 comprend ainsi une extrémité axiale amont libre qui délimite elle aussi l'enceinte de lubrification E1.

Dans l'exemple de la figure 3, un gicleur 60 est configuré pour introduire de l'huile de lubrification dans cette enceinte E1.

Sous l'action de la force centrifuge, l'huile présente dans l'enceinte E1 est acheminée dans le roulement aval 16 par l'intermédiaire d'orifices 61-64 et de rainures 65 aménagés dans la deuxième partie de support 25 et dans la bague interne 23 du roulement aval 16 (voir figure 4). Cette huile est évacuée du roulement 16 par des orifices de drainage 66.

Des procédés de montage et de démontage du roulement aval 16 sont donnés en exemple ci-après.

Le montage du roulement 16 de la figure 4 peut comprendre, de préférence dans l'ordre, les étapes suivantes :
- une étape de mise en place de la bague interne 23 sur la deuxième partie de support 25 de l'arbre de soufflante 12, optionnellement avec interposition d'une cale entre la bague interne 23 et l'épaulement 27 afin de positionner axialement l'arbre de soufflante 12 par rapport au carter fixe 110 (cale non représentée sur la figure 4) ;
- une étape de mise en place des rangées de billes aval 40 et amont 41, et des cages 46 et 47 correspondantes ;
- une étape de positionnement de l'élément de bague externe aval 33 ;
- une étape de mise en place de l'élément de bague externe amont 32, par emboîtement sur l'élément de bague externe aval 33 ;
- une étape de vissage de l'élément fileté 34 de manière à serrer l'un contre l'autre les éléments de bague externe amont 32 et aval 33, cette étape permettant de précharger le roulement 16 ;
- une étape de positionnement et de fixation du support 28 sur la bague externe 24 ;
- une étape de serrage de l'écrou 26 de manière à bloquer axialement la bague interne 23.

Le montage du roulement 16 de la figure 5 peut comprendre, de préférence dans l'ordre, les étapes suivantes :
- une étape de mise en place de la demi-bague interne aval 31 sur la deuxième partie de support 25 de l'arbre de soufflante 12, optionnellement avec interposition d'une cale 80 entre la demi-bague interne aval 31 et l'épaulement 27 afin de positionner axialement l'arbre de soufflante 12 par rapport au carter fixe 110 ;
- une étape de mise en place de la rangée de billes aval 40 et de la cage 46 correspondante ;
- une étape de mise en place de la bague externe 24 sur le support 28 ;
- une étape de mise en place de la rangée de billes amont 41 et de la cage 47 correspondante ;
- une étape de mise en place de la demi-bague interne amont 30 sur la deuxième partie de support 25 de l'arbre de soufflante 12 ;
- une étape de vissage de l'écrou 26 de manière à serrer l'un contre l'autre les demi-bagues interne amont 30 et aval 31, cette étape permettant de précharger le roulement 16 et de bloquer axialement la bague interne 23.

Dans chacun des modes de réalisation des figures 4 et 5, le démontage du roulement 16 peut comprendre des étapes correspondantes réalisées dans l'ordre inverse.

Le retrait de la bague interne 23 par rapport à l'arbre de soufflante 12 peut être réalisé à l'aide d'un crochet de défrettage coopérant avec une gorge 70 de la bague interne 23.

En référence à la figure 2, il ressort de la description qui précède que la précharge du roulement 16 permet de limiter le jeu axial de la couronne 141 du réducteur 14, la couronne 141 étant solidaire de l'arbre de soufflante 12 et guidée en rotation par le roulement 16. Il en résulte une réduction des désalignements dans le réducteur 14, en particulier entre la couronne 141 et les pignons satellites 143, permettent de prolonger la durée de vie du réducteur 14.

Les modes de réalisation décrits ci-dessus ne sont aucunement limitatifs, l'invention couvrant tout ensemble de soufflante 13 dont l'arbre de soufflante 12 est guidé par un premier roulement 15 à rouleaux et un deuxième roulement 16 à double rangée de billes à contact oblique. Par exemple, l'invention s'applique également à une turbomachine dénuée de réducteur 14 entre l'arbre de soufflante 12 et le générateur de gaz, dont l'architecture serait susceptible d'entraîner une inversion de force axiale de l'arbre de soufflante lors du fonctionnement de la turbomachine.

## Revendications

1. Ensemble de soufflante (13) pour turbomachine (2) d'aéronef, cet ensemble comprenant un arbre de soufflante (12) et un premier (15) et un deuxième roulement (16) configurés pour guider l'arbre de soufflante (12) en rotation autour d'un axe central (A1), le premier roulement (15) étant un roulement à rouleaux (17) cylindriques, cet ensemble étant **caractérisé en ce que** le deuxième roulement (16) est à double rangée de billes (40, 41) à contact oblique.

2. Ensemble selon la revendication 1, dans lequel le deuxième roulement (16) comprend une première (40) et une deuxième rangée de billes (41), ainsi qu'une bague interne (23) et une bague externe (24) comprenant chacune une première (42, 43) et une deuxième piste (44, 45), la première piste (42, 43) des bagues interne (23) et externe (24) recevant la première rangée de billes (40), la deuxième piste (44, 45) des bagues interne (23) et externe (24) recevant la deuxième rangée de billes (41).

3. Ensemble selon la revendication 2, dans lequel l'une parmi les bagues interne (23) et externe (24) du deuxième roulement (16) comprend une première demi-bague (31) formant la première piste (42) de cette bague et une deuxième demi-bague (30) formant la deuxième piste (44) de cette bague.

4. Ensemble selon la revendication 2 ou 3, dans lequel les billes de la première rangée (40) ont un diamètre différent des billes de la deuxième rangée (41), de préférence de sorte que le rapport du diamètre des billes de l'une de ces rangées et le diamètre des billes de l'autre rangée soit supérieur à 1,5.

5. Ensemble selon l'une quelconque des revendications 2 à 4, dans lequel la première (43) et la deuxième piste (45) de la bague externe (24) du deuxième roulement (16) sont axialement situées entre la première (42) et la deuxième piste (44) de la bague interne (23) du deuxième roulement (16).

6. Ensemble selon l'une quelconque des revendications 1 à 5, cet ensemble comprenant un support (28) fixe configuré pour supporter une bague externe (24) du deuxième roulement (16), le support (28) et la bague externe (24) du deuxième roulement (16) comprenant chacun un élément de liaison (50) formant une surface d'appui respective, lesdits éléments de liaison (50) étant configurés de sorte que :
- un effort appliqué sur l'arbre de soufflante (12) selon un premier sens le long dudit axe central (A1) tende à plaquer l'une contre l'autre les surfaces d'appui desdits éléments de liaison (50),
- un effort appliqué sur l'arbre de soufflante (12) selon un deuxième sens le long dudit axe central (A1) tende à éloigner l'une de l'autre les surfaces d'appui desdits éléments de liaison (50).

7. Ensemble selon l'une quelconque des revendications 1 à 6, dans lequel l'arbre de soufflante (12) comprend une première partie de support (19) portant une bague interne (18) du premier roulement (15), une deuxième partie de support (25) portant une bague interne (23) du deuxième roulement (16), une première partie de jonction tronconique (51) reliant entre elles la première (19) et la deuxième partie de support (25), et une deuxième partie de jonction tronconique (52) destinée à relier entre eux la deuxième partie de support (25) et un réducteur (14) de la turbomachine (2), ladite deuxième partie de support (25) ayant une épaisseur radiale supérieure à une épaisseur radiale de la première (51) et de la deuxième partie de jonction tronconique (52).

8. Turbomachine (2) d'aéronef, cette turbomachine (2) comprenant un ensemble de soufflante (13) selon l'une quelconque des revendications 1 à 7.

9. Turbomachine (2) selon la revendication 8, cette turbomachine (2) comprenant un arbre de turbine et un réducteur (14) configuré pour réduire la vitesse de rotation entre l'arbre de turbine et l'arbre de soufflante (12).

10. Ensemble propulsif (1) pour aéronef, cet ensemble propulsif (1) comprenant une turbomachine (2) selon la revendication 8 ou 9.

## Patentansprüche

1. Gebläseanordnung (13) für eine Turbomaschine (2) eines Luftfahrzeugs, wobei diese Anordnung eine Gebläsewelle (12) und ein erstes (15) und ein zweites Lager (16) umfasst, die konfiguriert sind, um die Gebläsewelle (12) in Drehung um eine zentrale Achse (A1) herum zu führen, wobei das erste Lager (15) ein Zylinderwälzlager (17) ist, wobei diese Anordnung **dadurch gekennzeichnet ist, dass** das zweite Lager (16) ein zweireihiges Kugellager (40, 41) mit Schrägkontakt ist.

2. Anordnung nach Anspruch 1, wobei das zweite Lager (16) eine erste (40) und eine zweite Kugelreihe (41), sowie einen inneren Ring (23) und einen äußeren Ring (24) umfasst, die jeweils eine erste (42, 43) und eine zweite Bahn (44, 45) umfassen, wobei die erste Bahn (42, 43) des inneren (23) und äußeren (24) Ringes die erste Kugelreihe (40) aufnimmt, die zweite Bahn (44, 45) des inneren (23) und äußeren (24) Ringes die zweite Kugelreihe (41) aufnimmt.

3. Anordnung nach Anspruch 2, wobei der eine von dem inneren (23) und äußeren (24) Ring des zweiten Lagers (16) einen ersten Halbring (31) umfasst, der die erste Bahn (42) dieses Ringes bildet, und einen zweiten Halbring (30), der die zweite Bahn (44) dieses Ringes bildet.

4. Anordnung nach Anspruch 2 oder 3, wobei die Kugeln der ersten Reihe (40) einen Durchmesser aufweisen, der sich von jenem der Kugeln der zweiten Reihe (41) vorzugsweise derart unterscheidet, dass das Verhältnis des Durchmessers der Kugeln der einen dieser Reihen und des Durchmessers der Kugeln der anderen Reihe größer als 1,5 ist.

5. Anordnung nach einem der Ansprüche 2 bis 4, wobei sich die erste (43) und die zweite Bahn (45) des äußeren Ringes (24) des zweiten Lagers (16) axial zwischen der ersten (42) und der zweiten Bahn (44) des inneren Ringes (23) des zweiten Lagers (16) befinden.

6. Anordnung nach einem der Ansprüche 1 bis 5, wobei diese Anordnung einen festen Träger (28) umfasst, der konfiguriert ist, um einen äußeren Ring (24) des zweiten Lagers (16) zu tragen, wobei der Träger (28) und der äußere Ring (24) des zweiten Lagers (16) jeweils ein Verbindungselement (50) umfassen, das eine jeweilige Anlegeoberfläche bildet, wobei die Verbindungselemente (50) derart konfiguriert sind, dass:
- eine Kraft, die in einer ersten Richtung entlang der zentralen Achse (A1) an die Gebläsewelle (12) angelegt wird, dazu tendiert, die Anlegeoberflächen der Verbindungselemente (50) aneinander zu drücken,
- eine Kraft, die in einer zweiten Richtung entlang der zentralen Achse (A1) an die Gebläsewelle (12) angelegt wird, dazu tendiert, die Anlegeoberflächen der Verbindungselemente (50) voneinander zu entfernen.

7. Anordnung nach einem der Ansprüche 1 bis 6, wobei die Gebläsewelle (12) einen ersten Trägerteil (19) umfasst, dereinen inneren Ring (18) des ersten Lagers (15) trägt, einen zweiten Trägerteil (25), der einen inneren Ring (23) des zweiten Lagers (16) trägt, einen ersten kegelstumpfförmigen Verbindungsteil (51), der den ersten (19) und den zweiten Trägerteil (25) miteinander verbindet, und einen zweiten kegelstumpfförmigen Verbindungsteil (52), der dazu bestimmt ist, den zweiten Trägerteil (25) und ein Getriebe (14) der Turbomaschine (2) miteinander zu verbinden, wobei der zweite Trägerteil (25) eine radiale Dicke aufweist, die größer ist, als eine radiale Dicke des ersten (51) und des zweiten kegelstumpfförmigen Verbindungsteils (52).

8. Turbomaschine (2) eines Luftfahrzeugs, wobei diese Turbomaschine (2) eine Gebläseanordnung (13) nach einem der Ansprüche 1 bis 7 umfasst.

9. Turbomaschine (2) nach Anspruch 8, wobei diese Turbomaschine (2) eine Turbinenwelle und ein Getriebe (14) umfasst, das konfiguriert ist, um die Drehgeschwindigkeit zwischen derTurbinenwelle und der Gebläsewelle (12) zu verringern.

10. Antriebsanordnung (1) für ein Luftfahrzeug, wobei diese Antriebsanordnung (1) eine Turbomaschine (2) nach Anspruch 8 oder 9 umfasst.

## Claims

1. A fan assembly (13) for an aircraft turbomachine (2), this assembly comprising a fan shaft (12) and first (15) and second bearings (16) configured to guide the fan shaft (12) in rotation about a central axis (A1), first bearings (15) being a bearing having cylindrical rollers (17), this assembly being **characterised in that** the second bearing (16) has a double-row of balls (40, 41) with oblique contact.

2. The assembly according to claim 1, wherein the second bearing (16) comprises first (40) and second rows of balls (41), and an inner ring (23) and an outer ring (24) each comprising first (42, 43) and second (44, 45) races, the first race (42, 43) of the inner (23) and outer (24) rings receiving the first row of balls (40), the second race (44, 45) of the inner (23) and outer (24) rings receiving the second row of balls (41).

3. The assembly according to claim 2, wherein one amongst the inner (23) and outer (24) rings of the second bearing (16) comprises a first half-ring (31) forming the first race (42) of this ring and a second half-ring (30) forming the second race (44) of this ring.

4. The assembly according to claim 2 or 3, wherein the balls of the first row (40) have a diameter different from the balls of the second row (41), preferably so that the ratio of the diameter of the balls of one of these rows and the diameter of the balls of the other row is higher than 1.5.

5. The assembly according to any one of claims 2 to 4, wherein the first (43) and second (45) races of the outer ring (24) of the second bearing (16) are axially located between the first (42) and second (44) races of the inner ring (23) of the second bearing (16).

6. The assembly according to any one of claims 1 to 5, said assembly comprising a fixed support (28) configured to support an outer ring (24) of the second bearing (16), the support (28) and the outer ring (24) of the second bearing (16) each comprising a connecting element (50) forming a respective bearing surface, said connecting elements (50) being configured so that:
- a force applied on the fan shaft (12) according to a first direction along said central axis (A1) tends to press against each other the bearing surfaces of said connecting elements (50),
- a force applied on the fan shaft (12) according to a second direction along said central axis (A1) tends to bring the bearing surfaces of said connecting elements (50) away from each other.

7. The assembly according to any one of claims 1 to 6, wherein the fan shaft (12) comprises a first support portion (19) carrying an inner ring (18) of the first bearing (15), a second support portion (25) carrying an inner ring (23) of the second bearing (16), a first frustoconical junction portion (51) connecting together the first (19) and second (25) support portions, and a second frustoconical junction portion (52) intended to connect together the second support portion (25) and a reduction gear (14) of the turbomachine (2), said second support portion (25) having a radial thickness larger than a radial thickness of the first (51) and second (52) frustoconical junction portions.

8. An aircraft turbomachine (2), this turbomachine (2) comprising a fan assembly (13) according to any one of claims 1 to 7.

9. The turbomachine (2) according to claim 8, this turbomachine (2) comprising a turbine shaft and a reduction gear (14) configured to reduce the rotational speed between the turbine shaft and the fan shaft (12).

10. A propulsion unit (1) for an aircraft, this propulsion unit (1) comprising a turbomachine (2) according to claim 8 or 9.
